# EUROPEAN PATENT APPLICATION

(11) **EP 4 841 939 A2**
(43) Date of publication of application: **18.11.2026**
(21) Application number: 26209345.3
(22) Date of filing: 20.06.2023
(51) Int. Cl.: H04L 9/40

(54) **SYSTEMS AND METHODS FOR AUTOMATICALLY DEPLOYING SECURITY UPDATES IN AN OPERATIONS TECHNOLOGY NETWORK**

(30) Priority: 28.06.2022 US 202217852017
(62) Document number(s) of the earlier application(s) in accordance with Art. 76 EPC: 23180275.2 / 4 354 280
(71) Applicant: Rockwell Automation Technologies, Inc., Mayfield Heights, OH 44124 (US)
(72) Inventor: VISOKY, Jack M., Mayfield Heights, 44124 (US); JASPER, Taryl J., Mayfield Heights, 44124 (US)
(74) Representative: Grünecker Patent- und Rechtsanwälte PartG mbB

(57) **Abstract**

A system includes a first computing node of a cluster of computing nodes that are part of a container orchestration system, a control system for controlling one or more operations of an operation technology (OT) component, and a second node of the cluster of computing nodes. The control system is communicatively coupled to the first computing node and the OT component. The second computing node may transmit a pod to the first computing node. The pod may cause the first computing node to perform operations that include deploying a container as a digital representation of the OT component, testing a security update on the digital representation, determining that the security update is ready for implementation in the OT component, and transmitting an indication that the security update is available for implementation to the OT component after determining that the security update is ready for implementation.

## Description

### BACKGROUND

The disclosure generally relates to deploying and managing security updates in an operations technology (OT) network. More particularly, embodiments of the present disclosure are related to systems and methods for automatically deploying and managing security updates to one or more OT assets within the OT network using an edge device such that any downtime of the OT assets as a result of the security updates is minimized.

In an operations technology (OT) network, a security policy is a set of one or more rules or procedures that govern access and use of an organization's OT assets. Characteristics of security policies may include confidentiality, availability, integrity, authentication, and non-repudiation of the organization's OT assets. As such, a security policy sets forth provisions that may govern management of OT assets, access to such assets, backups of such assets, security of such assets, and the like. However, an organization may be hesitant to install new security polices and/or updates to existing security policies because of possible downtime of the organization's assets or irreparable changes to the organization's assets as a result of the installation. Additionally, the organization may skip or unnecessarily delay the installation of important security policies and/or updates to existing security policies that address potentially consequential security vulnerabilities. Accordingly, it may be desirable for improved systems and methods for deploying, managing, and updating security policies in the OT network of an organization.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, an industrial control system includes an edge device associated with a plurality of components an industrial automation system. The edge device is distinct from a controller associated with the plurality of components, and the edge device includes one or more processors and a memory that includes instructions, that when executed by the processors, cause the processors to perform operations. The operations include receiving a security update for a component of the plurality of components of the industrial automation system from a network external to the industrial automation system. The operations also include transmitting an indication that the security update is available for implementation to the component. The component may determine a time period for implementation of the security update after receiving the indication that the security update is available. Additionally, the operations include receiving a request for the security update from the component and transmitting the security update to the component for implementation. The component may install the security update during the time period for implementation after receiving the security update.

In another embodiment, a system includes a first computing node of a cluster of computing nodes that are part of a container orchestration system, a control system for controlling one or more operations of an operation technology (OT) component, and a second node of the cluster of computing nodes. The control system is communicatively coupled to the first computing node, and the control system is communicatively coupled to the OT component. The second computing node may transmit a pod to the first computing node. The pod may cause the first computing node to perform operations that include deploying a container as a digital representation of the OT component, testing a security update on the digital representation of the OT component, determining that the security update is ready for implementation in the OT component in response to testing the security update on the digital representation of the OT component, and transmitting an indication that the security update is available for implementation to the OT component after determining that the security update is ready for implementation.

In yet another embodiment, a method includes receiving, via a first computing node of a cluster of computing nodes in a container orchestration system, a pod from a second computing node in the cluster of computing nodes; and deploying, via the first computing node, a container as a digital representation of an operational technology (OT) component. The method also includes generating, via the first computing node, one or more snapshots of the digital representation of the OT component; and receiving, via the first computing node, a request for a particular snapshot of the one or more snapshots of the digital representation of the OT component. The particular snapshot corresponds to a backup of the digital representation of the OT component before a change was implemented to the OT component. Additionally, the method includes transmitting, via the first computing node to the OT component, the particular snapshot of the digital representation. The OT component may restore a historical state of the OT component based on the particular snapshot of the digital representation.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an example of an industrial automation system, in accordance with an embodiment;
FIG. 2 is a perspective view of an additional example of an industrial automation system, in accordance with an embodiment;
FIG. 3 is a block diagram of an example industrial control system, in accordance with an embodiment;
FIG. 4 is a block diagram of an example operational technology (OT) network that coordinates with a container orchestration system, in accordance with an embodiment;
FIG. 5 is a flow chart of a method in which a component of an industrial automation system pulls a security update from an edge device for implementation, in accordance with an embodiment;
FIG. 6 is a flow chart of a method in which a container node of a container orchestration system tests a security update against a digital twin of a component of the industrial automation system before transmitting the security update to the component of the industrial automation system, in accordance with an embodiment; and
FIG. 7 is a flow chart of a method in which a container node of a container orchestration system transmits a snapshot of a digital twin of a component of the industrial automation system to restore a historical state of the component of the industrial automation system before a change was implemented to the component, in accordance with an embodiment.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. One or more specific embodiments of the present embodiments described herein will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As mentioned above, a security policy is a set of one or more rules or procedures that govern access and use of an organization's operational technology (OT) assets (e.g., industrial automation devices associated with OT machines). Characteristics of security policies may include confidentiality, availability, integrity, authentication, and non-repudiation of the organization's OT assets. As such, a security policy sets forth provisions that may govern management of OT assets, access to such assets, backups of such assets, security of such assets, and the like. In some circumstances, an organization may be hesitant to install new security polices and/or updates to existing security policies because of possible downtime of the organization's assets, irreparable changes to the organization's assets as a result of the installation, or other unintended side effects of making the changes. In such cases, the organization may skip or unnecessarily delay the installation of important security policies and/or updates to existing security policies that address potentially consequential security vulnerabilities.

Accordingly, the present disclosure is directed to an edge device within a network that automatically deploys security updates to one or more OT assets within the network. As used herein, a "security update" may refer to a new security policy to be implemented by the OT asset, an update to an existing security policy implemented by the OT asset, a new security setting to be implemented by the OT asset, an update to an existing security setting implemented by the OT asset, a new security rule to be implemented by the OT asset, an update to an existing security rule implemented by the OT asset, software (e.g., code) to be implemented by the OT asset, an update to at least a portion of software (e.g., code) implemented by the OT asset, data (e.g., configuration data) to be utilized by the software implemented by the OT asset, an update to existing data (e.g., configuration data) utilized by the software implemented by the OT asset, a new version of firmware to be implemented by the OT asset, an update to an existing version of firmware implemented by the OT asset, or the like.

In certain embodiments, a security update may be smaller, more targeted, and/or deployed to an OT asset when a specific issue associated with the OT asset is recognized. For instance, a security update may specifically target a known or detected vulnerability associated with the OT asset. Additionally, the security update may be customized to a particular OT asset. For instance, rather than updating an entire device image associated with the OT asset, the security update may only update a portion of the device image (e.g., code or data) to be modified by the security update. In this way, specific functions and/or capabilities of the OT asset may be added or updated without affecting other functions and/or capabilities of the OT asset.

Additionally, in certain embodiments, an OT asset may pull a security update from the edge device after receiving an indication that the security update is ready for implementation on the OT asset. In this way, the OT asset may determine when to implement (e.g., install) the security update in accordance with an operation schedule associated with the OT asset. For instance, the OT asset may implement the security update during an expected period of downtime associated with the OT asset (e.g., overnight or upon the next power-up cycle or power-down cycle). Additionally, network traffic to and from a controller associated with the OT asset may be reduced by pulling the security update from the edge device instead of the controller.

Further, the security update may be tested on a digital twin of the OT asset before the security update has been implemented on the OT asset. For instance, the edge device may generate and maintain the digital twin of an OT asset in a memory of the edge device. As used herein, the term "digital twin" refers to a digital representation of the OT asset, a digital representation of a system that the OT asset is a part of, or the like. For example, the digital twin is a digital replica of the OT asset such that the digital twin includes each component, each feature, and/or each characteristic of the OT asset in the real world. In certain embodiments, the digital twin may be used to test an implementation of a security update in the OT asset before implementation of the security update in the OT asset. Additionally, the digital twin may be used to generate and store snapshots of the real-world OT asset at various moments in time (e.g., before a security update has been implemented on the OT asset). The snapshots may then be used as respective backups for the OT asset. For example, after the edge device has generated a digital twin of the OT asset and stored one or more snapshots of the digital twin, a security update may be implemented on the OT asset. If the security update causes an undesirable or unintended effect to the OT asset, the edge device may push a snapshot of the digital twin before the security update had been implemented to the OT asset. The OT asset may then revert a state of the OT asset back to a previous state of the OT asset based on the snapshot of the digital twin. In this way, the edge device may be used to seamlessly test different types of security updates to an OT asset before implementing a security update to the OT asset and reverse any unintended changes to the OT asset after implementing the security update to the OT asset.

In certain embodiments, a container orchestration system may be used to implement the techniques described herein instead of the edge device. For instance, the container orchestration system may deploy a security update to an OT asset and/or an OT asset may pull a security update from the container orchestration system. Additionally, the container orchestration system may deploy respective containers as digital twins of the OT asset. As mentioned above, a digital twin of the OT asset may be used to test different types of security updates to the OT asset before implementing the OT asset and/or reverse any unintended changes to the OT asset after implementing the security update to the OT asset.

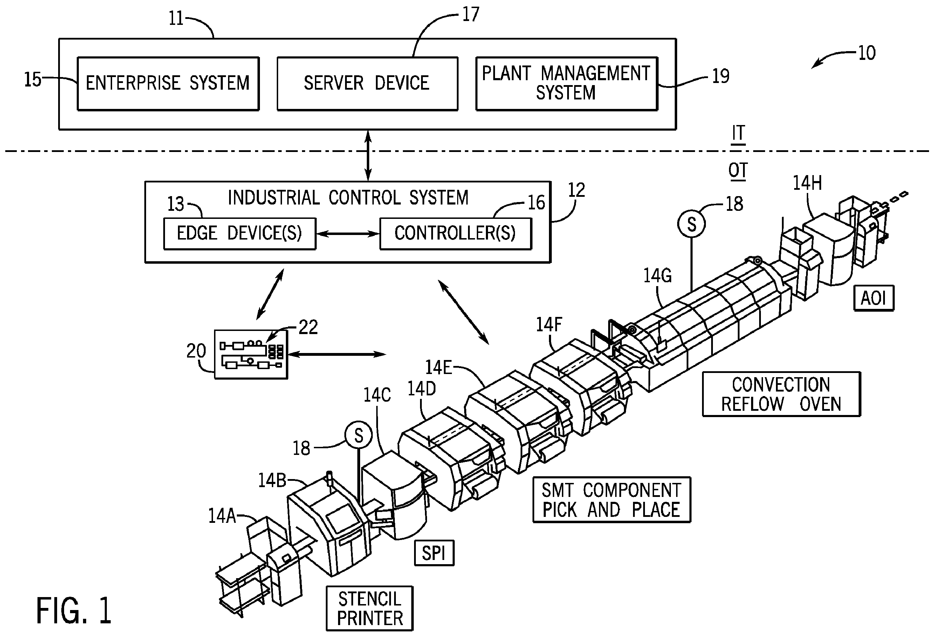

By way of introduction, FIG. 1 is a perspective view of an example industrial automation system 10 controlled by an industrial control system 12. The industrial automation system 10 includes stations 14 having machine components and/or machines (e.g., OT assets) to conduct functions within an automated process, such as silicon wafer manufacturing, as is depicted. The automated process may begin at station 14A used for loading objects, such as substrates, into the industrial automation system 10 via a conveyor section. The conveyor section may transport the objects to a station 14B to perform a first action, such as printing solder paste to the substrate via stenciling. As objects exist from the station 14B, the conveyor section may transport the objects to a station 14C for solder paste inspection (SPI) to inspect printer results, to a station 14D, 14E, and 14F for surface mount technology (SMT) component placement, to a station 14G for a convection reflow oven to melt the solder to make electrical couplings, and finally to a station 14H for automated optical inspection (AOI) to inspect the object manufactured (e.g., the manufactured printed circuit board). After the objects have passed through the various stations, the objects may be removed from the station 14H, for example, for storage in a warehouse or for shipment. It should be understood, however, for other applications, the particular system, machine components, machines, stations, and/or conveyors may be different from the system depicted in FIG. 1 or spatially adapted to the application.

For example, the industrial automation system 10 may include machinery (e.g., OT assets) to perform various operations in a compressor station, an oil refinery, a batch operation for making food items, pharmaceuticals, cosmetics, chemical processing operations, brewery operations, mining operations, a mechanized assembly line, and so forth. Accordingly, the industrial automation system 10 may include a variety of operational components (e.g., OT assets), such as electric motors, valves, actuators, temperature elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of operational technology (OT) data regarding operation, status, sensor data, operational modes, alarm conditions, or the like, that may be desirable to output for analysis with information technology (IT) data from an IT network, for storage in an IT network, for analysis with expected operation set points (e.g., thresholds), or the like.

In certain embodiments, one or more properties of equipment of the industrial automation system 10, such as the stations 14, may be monitored and controlled by the industrial automation system 10 for regulating control variables. For example, sensing devices (e.g., sensors 18) may monitor various properties of the industrial automation system 10 and may be used by the industrial control system 12 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial control system 12 may receive data from the associated devices and use the data to perform their respective operations more efficiently. For example, a controller 16 of the industrial control system 12 may receive data regarding a temperature of a connected motor and may adjust operations of the motor drive based on the data.

As mentioned above, an edge device 13 of the industrial control system 12 may automatically deploy one or more security updates to one or more components (e.g., OT assets) of the industrial automation system 10. As used herein, an "edge device" is a device within the industrial automation system 10 that may that controls data flow between the industrial automation system 10 (e.g., the OT network) and an external network 11. For example, the edge device may be a router, a switch, or the like. In certain embodiments, the edge device 13 may receive a security update from the external network 11 that includes an enterprise system 15, a server device 17, a plant management system 19, or the like. The enterprise system 15 may include software and/or hardware components that support business processes, information flows, reporting, data analytics, and the like. The server device 17 may include any suitable server computing device. In one embodiment, the server device 17 may include a security policy server that manages communication between the components of the industrial automation system 10. That is, the security policy server may manage one or more security policies that include provisions or instructions that detail how communication between the components of the industrial automation system 10 is performed. As such, the server device 17 may implement a security policy (e.g., a security update) related to centrally managing communications between the components of the industrial automation system 10. The security policy may include identification data or information for components of the industrial automation system 10, or endpoints thereof, that are to be trusted, information regarding which communication ports to use, and the like. The plant management system 19 may include any suitable management computing system that receives data from a number of control systems (e.g., industrial control system 12). As such, the plant management system 19 may track operations of a variety of facilities in various locations. In addition, the plant management system 19 may issue control commands to the components of the industrial automation system 10.

After receiving one or more security updates from the external network 11, the components of the industrial automation system 10 may pull a security update from the edge device 13. For instance, the edge device 13 may transmit an indication to a component of the industrial automation system 10 that a security update is ready for implementation (e.g., installation) on the component. After receiving the indication that the security update is ready for implementation from the edge device 13, the component of the industrial automation system 10 may pull the security update from the edge device 13. In certain embodiments, the component of the industrial automation system 10 may transmit a request to the edge device 13 for the security update.

Additionally, the edge device 13 may generate and maintain a digital twin of a component of the industrial automation system 10 in a memory of the edge device 13. For instance, the digital twin of the component is a digital replica of the component such that the digital twin includes each part of the component, each feature of the component, and/or each characteristic of the component in the real world. The digital twin may be used to test an implementation of a security update in the component of the industrial automation system 10 before implementation of the security update in the component of the industrial automation system 10. Additionally, the digital twin may be used to generate and store snapshots of the component of the industrial automation system 10 at various moments in time (e.g., before a security update has been implemented on the component). The edge device 13 may store the snapshots in the memory of the edge device 13. The snapshots may then be used as respective backups for the component of the industrial automation system 10. For instance, if a security update that was implemented in the component of the industrial automation system 10 caused an unintended change, the edge device 13 may push a snapshot of the digital twin representing the state of the component before the security update was implemented to the component of the industrial automation system 10. After receiving the snapshot of the digital twin, the component of the industrial automation system 10 may revert to the state of the component before the security update was implemented based on the snapshot of the digital twin. In some embodiments, the edge device 13 may generate and maintain more than one digital twin of a component of the industrial automation system 10. For instance, each digital twin may be used to test different types of security updates that may be deployed to the component of the industrial automation system 10, maintain different states of the components of the industrial automation system 10 over time, or the like.

The industrial control system 12 may be communicatively coupled to a display/operator interface 20 (e.g., a human-machine interface (HMI)) and to devices of the industrial automation system 10 (e.g., OT assets). It should be understood that any suitable number of industrial control systems 12 may be used in a particular embodiment of an industrial automation system 10. The industrial control system 12 may facilitate representing components of the industrial automation system 10 through programming objects that may be instantiated and executed to provide simulated functionality similar or identical to the actual components, as well as visualization of the components, or both, on the display/operator interface 20. The programming objects may include code and/or instruction stored in the industrial control system 12 and executed by processing circuitry of the industrial control system 12. The processing circuitry may communicate with memory circuitry to permit the storage of the component visualizations.

As illustrated, the display/operator interface 20 depicts representations 22 of the components of the industrial automation system 10. For example, the display/operator interface 20 may display one or more digital twins of the components (e.g., OT assets) of the industrial automation system 10. The industrial control system 12 may use data transmitted by sensors 18 to update visualizations of the components via changing one or more statuses, states, and/or indications of current operations of the components. In certain embodiments, the edge device 13 may use data transmitted by the sensors 18 to update the digital twins of the components of the industrial automation system 10 over time. These sensors 18 may be any suitable device adapted to provide information regarding process conditions. Indeed, the sensors 18 may be used in a process loop (e.g., a control loop) that may be monitored and controlled by the industrial control system 12. As such, a process loop may be activated based on process inputs (e.g., an input from the sensor 18) or direct input from a person via the display/operator interface 20. The person operating and/or monitoring the industrial automation system 10 may reference the display/operator interface 20 to determine various statuses, states, and/or current operations of the industrial automation system 10, a particular component (e.g., OT asset), and/or digital twins of a particular component. Furthermore, the person operating and/or monitoring the industrial automation system 10 may adjust various components to start, stop, power-down, power-on, or otherwise adjust an operation of one or more components of the industrial automation system 10 through interactions with control panels or various input devices. In certain embodiments, the person operating and/or monitoring the industrial automation system 10 may interact with the control panels or various input devices to instruct the edge device 13 to generate and maintain one or more digital twins of a particular component of the industrial automation system 10, to test one or more security updates on a digital twin of a particular component of the industrial automation system 10, to generate a snapshot of a digital twin of a particular component of the industrial automation system 10, to push a snapshot of a particular digital twin to the component of the industrial automation system 10, or the like.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, the sensors 18 may gather OT data indicative of one or more operations of the industrial automation system 10 or the industrial control system 12. In this way, the OT data may be analog data or digital data indicative of measurements, statuses, alarms, or the like, associated with operation of the industrial automation system 10 or the industrial control system 12.

The industrial control system 12 described above may operate in an OT space in which OT data is used to monitor and control OT assets, such as the equipment illustrated in the stations 14 of the industrial automation system 10 or other industrial equipment or components. The OT space, environment, or network generally includes direct monitoring and control operations that are coordinated by the industrial control system 12 and a corresponding OT asset. For example, a programmable logic controller (PLC) (e.g., controller 16) may operate in the OT network to control operations of an OT asset (e.g., drive, motor). The industrial control system 12 may be specifically programmed or configured to communicate directly with the respective OT assets.

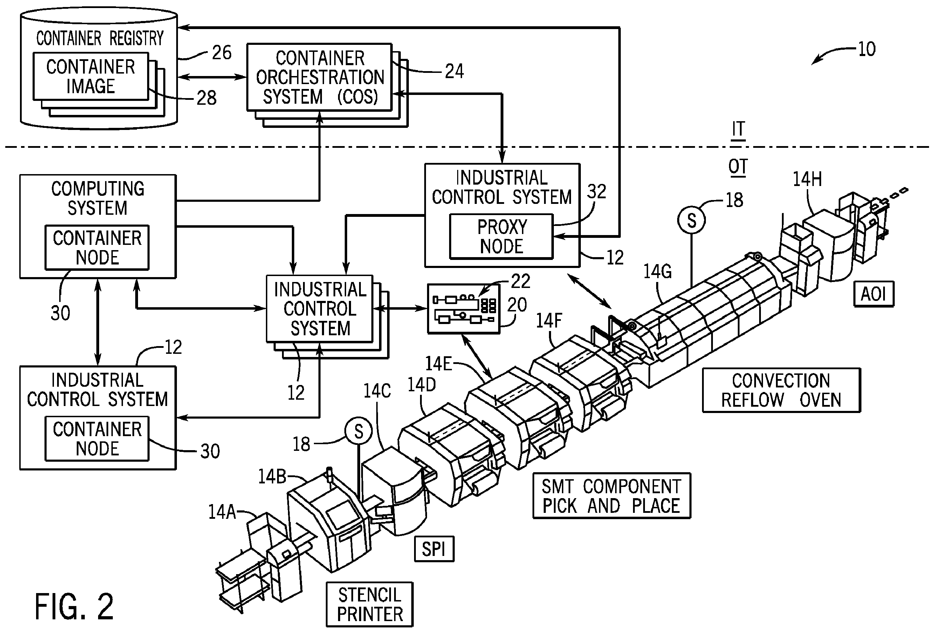

As mentioned above, in certain embodiments, a container orchestration system (e.g., Docker, KUBERNETES^{®}) may be used to implement the techniques described herein instead of the edge device 13. FIG. 2 is a perspective view of an additional example of the industrial automation system 10 of FIG. 1. As illustrated in FIG. 2, a container orchestration system 24 may operate in an information technology (IT) environment. That is, the container orchestration system 24 may include a cluster of multiple computing devices that coordinates an automatic process of managing or scheduling work of individual containers (e.g., operating system level virtualization) for applications within the computing devices of the cluster. In other words, the container orchestration system 24 may be used to automate various tasks at scale across multiple computing devices. By way of example, the container orchestration system 24 may automate tasks such as configuring and scheduling of containers, provisioning deployments of containers, determining availability of containers, configuring applications in terms of the containers that they run in, scaling of containers to equally balance application workloads across an infrastructure, allocating resources between contains, performing load balancing, traffic routing and service discovery of containers, performing health monitoring of containers, securing the interactions between containers, and the like. In any case, the container orchestration system 24 may use configuration files to determine a network protocol to facilitate communication between containers, a storage location to save logs, and the like. The container orchestration system 24 may also schedule deployment of containers into clusters and identify a host (e.g., node) that may be best suited for executing the container. After the host is identified, the container orchestration system 24 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 26 as container images 28. The container registry 26 may be any suitable data storage or database that may be accessible to the container orchestration system 24. The container image 28 may correspond to an executable software package that includes the tools and data employed to execute a respective application. That is, the container image 28 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 24. The deployment configuration file may be stored in the container registry 26 along with the respective container images 28 associated with the deployment configuration file. The deployment configuration file may include a list of different pods and a number of replicas for each pod that should be operating within the container orchestration system 24 at any given time. Each pod may correspond to a logical unit of an application, which may be associated with one or more containers. The container orchestration system 24 may coordinate the distribution and execution of the pods listed in the deployment configuration file, such that the desired state is continuously met. In some embodiments, the container orchestration system 24 may include a master node that retrieves the deployment configuration files from the container registry 26, schedules the deployment of pods to the connected nodes, and ensures that the desired state specified in the deployment configuration file is met. For instance, if a pod stops operating on one node, the master node may receive a notification from the respective worker node that is no longer executing the pod and deploy the pod to another worker noted to ensure that the desired state is present across the cluster of nodes.

The container orchestration system 24 includes a cluster of computing devices, computing systems, or container nodes that may work together to achieve certain specifications or states, as designated in the respective container. In some embodiments, container nodes 30 may be integrated within industrial control systems 12 as shown in FIG. 2. That is, container nodes 30 may be implemented by the industrial control systems 12, such that they appear as worker nodes to the maser node in the container orchestration system 24. In this way, the master node of the container orchestration system 24 may send commands to the container nodes 30 that are also configured to perform applications and operations for the respective industrial equipment and components.

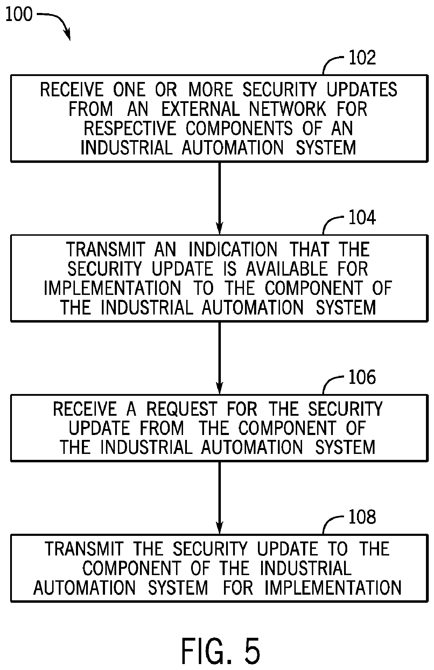

In certain embodiments, one or more container nodes 30 of the container orchestration system 24 may deploy a security update to a component of the industrial automation system 10. Additionally, or alternatively, the component of the industrial automation system 10 may pull a security update from one or more container nodes 30 of the container orchestration system 24. For instance, a container node 30 of the container orchestration system 24 may transmit an indication to the component of the industrial automation system 10 that a security update is ready for implementation. After receiving the indication that the security update is ready for implementation from the container node 30, the component of the industrial automation system 10 may pull the security update from the container node 30 for implementation. For instance, the container node 30 may perform the method 100 at blocks 106 and 108 with respect to FIG. 5.

Additionally, one or more container nodes 30 of the container orchestration system 24 may deploy respective containers as digital twins of a component of the industrial automation system 10. For instance, a container node 30 of the container orchestration system 24 may generate and maintain a digital twin of the component of the industrial automation system 10. The digital twin may be used to test different types of security updates to the component of the industrial automation system 10 before implementing the different types of security updates in the component of the industrial automation system 10. Further, the digital twin (e.g., the container) may be used to generate and store snapshots of the component of the industrial automation system 10 at various moments in time (e.g., before a security update has been implemented on the component). The container node 30 may store the snapshots in a memory accessible by the container node 30. The snapshots may then be used as respective backups for the component of the industrial automation system 10. For instance, if a security update that was implemented in the component of the industrial automation system 10 caused an unintended change, the container node 30 may push a snapshot of the digital twin representing the state of the component before the security update was implemented to the component of the industrial automation system 10. After receiving the snapshot of the digital twin, the component of the industrial automation system 10 may revert to the state of the component before the security update was implemented based on the snapshot of the digital twin.

With the foregoing in mind, the container nodes 30 may be integrated with the industrial control systems 12, such that they serve as passive-indirect participants, passive-direct participants, or active participants of the container orchestration system 24. As passive-indirect participants, the container nodes 30 may respond to a subset of all of the commands that may be issued by the container orchestration system 24. In this way, the container nodes 30 may support limited lifecycle features, such as receiving pods, executing the pods, updating a respective filesystem to include software packages for execution by the industrial control system 12, and reporting the status of the pods to the master node of the container orchestration system 24. The limited features implementable by the container nodes 30 that operate in the passive-indirect mode may be limited to commands that the respective industrial control system 12 may implement using native commands that map directly to the commands received by the master node of the container orchestration system 24. Moreover, the container node 30 operating in the passive-indirect mode of operation may not be capable to push the packages or directly control the operation of the industrial control system 12 to execute the package. Instead, the industrial control system 12 may periodically check the file system of the container node 30 and retrieve the new package at that time for execution.

As passive-direct participants, the container nodes 30 may operate as a node that is part of the cluster of nodes for the container orchestration system 24. As such, the container node 30 may support the full container lifecycle features. That is, the container node 30 operating in the passive-direct mode may unpack a container image and push the resultant package to the industrial control system 12, such that the industrial control system 12 executes the package in response to receiving it from the container node 30. As such, the container orchestration system 24 may have access to a worker node that may directly implement commands received from the master node onto the industrial control system 12.

In the active participant mode, the container node 30 may include a computing module or system that hosts an operating system (e.g., Linux) that may continuously operate a container host daemon that may participate in the management of container operations. As such, the active participant container node 30 may perform any operations that the master node of the container orchestration system 24 may perform. By including a container node 30 operating in the OT space, the container orchestration system 24 is capable of extending its management operations into the OT space. That is, the container node 30 may provision devices in the OT space, serve as a proxy node 32 to provide bi-directional coordination between the IT space and the OT space, and the like. For instance, the container node 30 operating as the proxy node 32 may intercept orchestration commands and cause the industrial control system 12 to implement appropriate machine control routines based on the commands. The industrial control system 12 may confirm the machine state to the proxy node 32, which may then reply to the master node of the container orchestration system 24 on behalf of the industrial control system 12.

Additionally, the industrial control system 12 may share an OT device tree via the proxy node 32. As such, the proxy node 32 may provide the master node with state data, address data, descriptive metadata, versioning data, certificate data, key information, and other relevant parameters concerning the industrial control system 12. Moreover, the proxy node 32 may issue requests targeted to other industrial control systems 12 to control other OT devices. For instance, the proxy node 32 may translate and forward commands to a target OT device using one or more OT communication protocols, may translate and receive replies from the OT devices, and the like. As such, the proxy node 32 may perform health checks, provide configuration updates, send firmware patches, send security updates, execute key refreshes, and other OT operations for other OT devices.

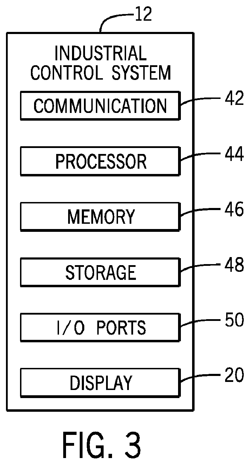

With the foregoing in mind, FIG. 3 is a block diagram of an example industrial control system 12 that may be used with the embodiments described herein. The industrial control system 12 may include a communication component 42, a processor 44, a memory 46, a storage 48, input/output (I/O) ports 50, a display 20, and the like. The communication component 42 may be a wireless or wired communication component that facilitates communication between the container orchestration system 24 and the industrial control system 12, or any other suitable electronic device. The processor 44 may be any type of computer processor or microprocessor capable of executing computer-executable code. The processor 44 may also include multiple processors that may perform the operations described below.

The memory 46 and the storage 48 may be any suitable article of manufacture that may serve as media to store processor-executable code, data, or the like. These articles of manufacture may represent computer-readable media (i.e., any suitable form of memory or storage) that may store the processor-executable code used by the processor 44 to perform the presently disclosed techniques. The memory 46 and the storage 48 may represent non-transitory computer-readable media (e.g., any suitable form of memory or storage) that may store the processor-executable code used by the processor 44 to perform various techniques described herein. It should be noted that non-transitory merely indicates that the media is tangible and not a signal.

The I/O ports 50 may couple to one or more sensors 18, one or more input devices, one or more displays, or the like to facilitate human or machine interaction with the industrial control system 12. For example, based on a notification provided to a user via a display 20, the user may use an input device to instruct the adjustment of an OT device.

The display 20, as discussed above, may operate to depict visualizations associated with software or executable code being processed by the processor 44. For example, the display 20 may display one or more digital twins of the components (e.g., OT assets) of the industrial automation system 10. In one embodiment, the display 20 may be a touch display capable of receiving inputs from a user of the industrial control system 12. The display 20 may be any suitable type of display, such as a liquid crystal display (LCD), plasma display, or an organic light emitting diode (OLED) display, for example. Additionally, in one embodiment, the display 20 may be provided in conjunction with a touch-sensitive mechanism (e.g., a touch screen) that may function as part of a control interface for the industrial control system 12.

Although FIG. 3 is depicted with respect to the industrial control system 12, it should be noted that the container orchestration system 24, the container nodes 30, and the proxy node 32 may also include the same or similar components to perform, or facilitate performing, the various techniques described herein. Moreover, it should be understood that the components described with respect to FIG. 3 are exemplary figures and the industrial control system 12 and other suitable computing systems may include additional or fewer components as detailed above.

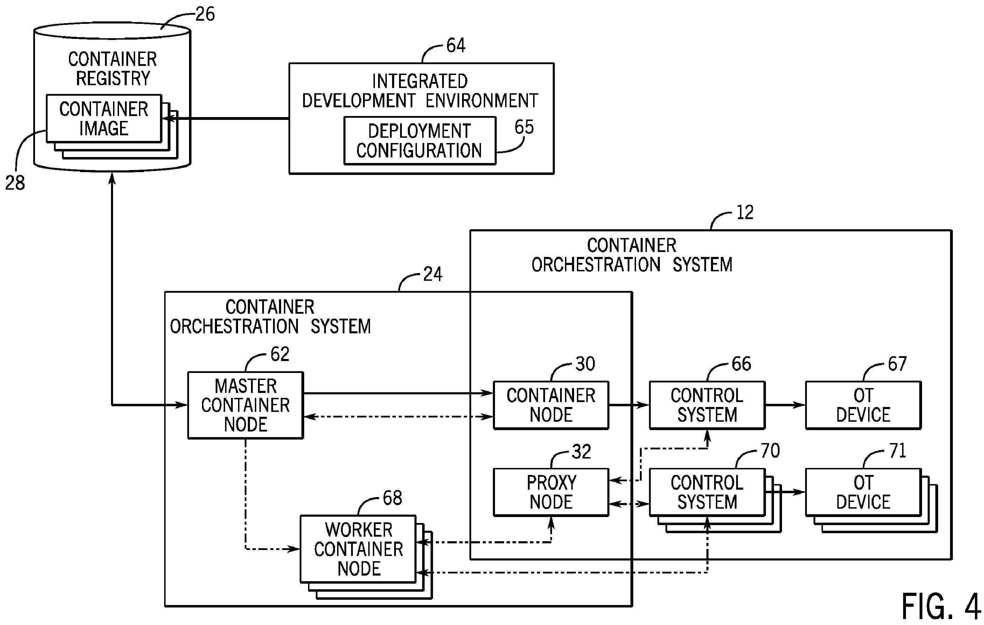

With the foregoing in mind, FIG. 4 illustrates a block diagram that depicts the relative positions of the container node 30 and the proxy node 32 with respect to the container orchestration system 24. As mentioned above, the container orchestration system 24 includes a collection of nodes that are used to achieve a desired state of one or more containers across multiple nodes. As shown in FIG. 4, the container orchestration system 24 includes a master node 62 that executes control plane processes for the container orchestration system 24. The control plane processes may include the processes that enable the container orchestration system 24 to coordinate operations of the container nodes 30 to meet the desired states. As such, the master node may execute an applications programming interface (API) for the container orchestration system 24, a scheduler component, core resources controllers, and the like. By way of example, the master container node 62 may coordinate all of the interactions between nodes of the cluster that make up the container orchestration system 24. Indeed, the master container node 62 may be responsible for deciding the operations that will run on container nodes 30 including scheduling workloads (e.g., containerized applications), managing the workloads' lifecycle, scaling, upgrading, managing network and storage resources for the workloads, and the like. The master container node 62 may run an API server to handle requests and status updates received from the container nodes 30.

By way of operation, an integrated development environment (IDE) tool 64 may be used by an operator to develop a deployment configuration file 65. As mentioned above, the deployment configuration file 65 may include details regarding the containers, the pods, constraints for operating the containers/pods, and other information that describe a desired state of the containers specified in the deployment configuration file 65. In some embodiments, the deployment configuration file 65 may be generated in a YAML file, a JavaScript Object Notation (JSON) file, or other suitable file format that is compatible with the container orchestration system 24. After the IDE tool 64 generates the deployment configuration file 65, the IDE tool 64 may transmit the deployment configuration file 65 to the container registry 26, which may store the file along with container images 28 representative of the containers stored in the deployment configuration file 65.

In some embodiments, the master container node 62 may receive the deployment configuration file 65 via the container registry 26, directly from the IDE tool 64, or the like. The master container node 62 may use the deployment configuration file 65 to determine a location to gather the container images 28, determine communication protocols to use to establish networking between container nodes 30, determine locations for mounting storage volumes, locations to store logs for the containers, and the like.

Based on the desired state provided in the deployment configuration file 65, the master container node 62 may deploy containers to the container host nodes 30. That is, the master container node 62 may schedule the deployment of a container based on constraints (e.g., CPU or memory availability) provided in the deployment configuration file 65. After the containers are operating on the container nodes 30, the master container node 62 may manage the lifecycle of the containers to ensure that the containers specified by the deployment configuration file 65 is operating according to the specified constraints and the desired state.

Keeping the foregoing in mind, the industrial control system 12 may not use an operating system (OS) that is compatible with the container orchestration system 24. That is, the container orchestration system 24 may be configured to operate in the IT space that involves the flow of digital information. In contrast, the industrial control system 12 may operate in the OT space that involves managing the operation of physical processes and the machinery used to perform those processes. For example, the OT space may involve communications that are formatted according to OT communication protocols, such as FactoryTalk Live Data, EtherNet/IP. Common Industrial Protocol (CIP), OPC Direct Access (e.g., machine to machine communication protocol for industrial automation developed by the OPC Foundation), OPC Unified Architecture (OPC-UA) protocol, or any suitable OT communication protocol (e.g. DNP3, Modbus, Profibus, LonWorks, DALI, BACnet, KNX, EnOcean). Since the industrial control systems 12 operate in the OT space, the industrial control systems 12 may not be capable of implementing commands received via the container orchestration system 24.

In certain embodiments, the container node 30 may be programmed or implemented in the industrial control system 12 to serve as a node agent that can register the industrial control system 12 with the master container node 62. For example, the industrial control system 12 may include a programmable logic controller (PLC) that cannot support an operating system (e.g., Linux) for receiving and/or implementing requested operations issued by the container orchestration system 24. However, the PLC may perform certain operations that may be mapped to certain container events. As such, the container node 30 may include software and/or hardware components that may map certain events or commands received from the master container node 62 into actions that may be performed by the PLC. After converting the received command into a command interpretable by the PLC, the container node 30 may forward the mapped command to the PLC that may implement the mapped command. As such, the container node 30 may operate as part of the cluster of nodes that make up the container orchestration system 24, while a control system 66 (e.g., PLC) that coordinates the OT operations for an OT device 67 in the industrial control system 12. The control system 66 may include a controller, such as a programmable logic controller (PLC), a programmable automation controller (PAC), or any other controller that may monitor, control, and operate an industrial automation device or component.

The industrial automation device or component may correspond to an OT device 67. The OT device 67 may include any suitable industrial device that operates in the OT space. As such, the OT device 67 may be involved in adjusting physical processes being implemented via the industrial automation system 10. Additionally, as mentioned above, the OT device 67 may receive and implement a security update from container orchestration system 24. In some embodiments, the OT device 67 may include motor control centers, motors, human machine interfaces (HMIs), operator interfaces, contactors, starters, sensors, drives, relays, protection devices, switchgear, compressors, network switches (e.g., Ethernet switches, modular-managed, fixed-managed, service-router, industrial, unmanaged, etc.) and the like. In addition, the OT device 67 may also be related to various industrial equipment such as mixers, machine conveyors, tanks, skids, specialized original equipment manufacturer machines, and the like. The OT device 67 may also be associated with devices used by the equipment such as scanners, gauges, valves, flow meters, and the like. In one embodiment, every aspect of the OT device 67 may be controlled or operated by the control system 66.

In the present embodiments described herein, the control system 66 may thus perform actions based on commands received from the container node 30. By mapping certain container lifecycle states into appropriate corresponding actions implementable by the control system 66, the container node 30 enables program content for the industrial control system 12 to be containerized, published to certain registries, and deployed using the master container node 62, thereby bridging the gap between the IT-based container orchestrations system 24 and the OT-based industrial control system 12. As mentioned above, the container node 30 may deploy a security update to the OT device 67. Additionally, or alternatively, the OT device 67 may pull a security update from the container node 30 of the container orchestration system 24. Further, the container node 30 may deploy respective containers as digital twins of OT device 67. For instance, the container node 30 may generate and maintain a digital twin of the OT device 67. The digital twin may be used to test one or more types of security updates to the OT device 67 before implementing a security update in the OT device 67. Further, the container node 30 may use the digital twin (e.g., the container) to generate and store snapshots of the OT device 67 at various moments in time (e.g., before a security update has been implemented on the component). The snapshots may then be used as respective backups for the OT device 67. For instance, if a security update that was implemented in the OT device 67 caused an unintended change, the container node 30 may push a snapshot of the digital twin representing the state of the OT device 67 before the security update was implemented in the OT device 67. After receiving the snapshot of the digital twin, the OT device 67 may revert to the state of the OT device 67 before the security update was implemented based on the snapshot of the digital twin.

As mentioned above, an edge device 13 of the industrial control system 12 may automatically deploy one or more security updates to one or more components (e.g., OT assets) of the industrial automation system 10. In certain embodiments, the edge device 13 may receive respective security updates for one or more components and transmit respective indications to the components that the respective security updates are ready for implementation. Thereafter, the components of the industrial automation system 10 may pull a respective security update from the edge device 13. In this way, each component of the industrial automation system 10 may determine when to implement or install the security update in accordance with an operation schedule associated with the component of the industrial automation system 10. For instance, the component may implement the security update during an expected period of downtime. With the foregoing in mind, FIG. 5 illustrates a method 100 in which a component of an industrial automation system 10 may pull a security update from an edge device 13 for implementation after the edge device 13 receives the security update from an external network 11. Although the following description of the method 100 is described as being performed by the edge device 13, it should be understood that any suitable computing device that is configured to interface with the components of the industrial automation system 10 and the external network 11 to receive security updates for the components of the industrial automation system 10 may perform the operations described herein. For instance, the method 100 may be performed by one or more container nodes 30 of the container orchestration system 24 illustrated in FIGS. 2 and 4. In addition, although the method 100 is described in particular order, it should be understood that the method 100 may be performed in any suitable order.

At block 102, the edge device 13 may receive one or more security updates from the external network 11 (e.g., an enterprise system 15, a server device 17, a plant management system 19, or the like) for one or more components of the industrial automation system 10 (e.g., OT device 67). In certain embodiments, the edge device 13 may receive a security update as a signed data object to a corresponding component in the industrial automation system 10. The signed data object may include a digital certificate or a digital signature that certifies the ownership or authenticity of the data object. The digital certificate or digital signature may be implemented using any suitable cryptography scheme. In other embodiments, the edge device 13 may receive an unsigned security update for a corresponding component in the industrial automation system 10 from the external network 11. In such embodiments, the edge device 13 may employ any suitable cryptography scheme to sign the security update with the digital certificate or the digital signature that certifies the ownership or authenticity of the security update. After receiving the security update from the edge device 13, the component of the industrial automation system 10 may decode the digital certificate or the digital signature associated with the security update using a public or private key.

Additionally, as mentioned above, the security update may be targeted to a specific issue associated with the component of the industrial automation system 10 instead of an update to an entire image or state (e.g., operating code or data) of the component of the industrial automation system 10. For instance, the security update may target a vulnerability or an issue associated with particular feature, operation, or characteristic of the component of the industrial automation system 10. That is, upon implementation by the component of the industrial automation system 10, the security update may only update a portion of the image or state of the component of the industrial automation system 10. For example, the security update may be modular such that specific functions and/or capabilities of the component may be updated or changed without affecting other aspects of the component. In this way, the edge device 13 may facilitate "micro-patching" or "micro-updating" the component of the industrial automation system 10, thereby minimizing an expected downtime of the component during implementation of the security update because the component avoids implementing an update to the entire image or state of the component.

After receiving a security update from the external network 11, at block 104, the edge device 13 may transmit an indication that the security update is available for implementation to the component of the industrial automation system 10. After receiving the indication that the security update is available for implementation, the component of the industrial automation system 10 may determine a time period for implementing or installing the security update. In certain embodiments, the component of the industrial automation system 10 may determine an expected period of downtime of the component based on operation data associated with the component. For instance, the component of the industrial automation system 10 may perform one or more primary operations that support or contribute to a process provided by the industrial automation system and one or more background operations that are independent of the process provided by the industrial automation system 10. During the expected period of downtime of the component, the component may perform one or more background operations but not any primary operations. Additionally, or alternatively, the expected period of downtime may be during a period of inoperability or inaction associated with the component of the industrial automation system 10 (e.g., overnight), during a power-up cycle of the component, during a power-down cycle of the component, a periodic maintenance downtime of the component, a scheduled maintenance downtime of the component, or the like.

After determining the time period for implementing or installing the security update, the component of the industrial automation system 10 may transmit a request to pull the security update from the edge device 13. In some embodiments, the component of the industrial automation system 10 may transmit the request for the security update from the edge device 13 in response to receiving the indication that the security update is available for implementation. For instance, in such embodiments, the component of the industrial automation system 10 may determine a time period for implementation of the security update after receiving the security update from the edge device 13. In any case, at block 106, the edge device 13 receives a request for the security update from the component of the industrial automation system 10. At block 108, the edge device 13 may transmit the security update to the component of the industrial automation system 10. As mentioned above, in certain embodiments, the edge device 13 may cryptographically sign the security update before transmitting the security update to the component of the industrial automation system 10 for implementation.

After receiving the security update from the edge device 13, the component of the industrial automation system 10 may implement or install the security update. As mentioned above, the component of the industrial automation system 10 may implement the security update during a time period that minimizes the downtime of the component as a result of implementing the security update. For example, the time period may be an expected period of downtime or a scheduled period of downtime based on the operation of the component in the industrial automation system 10. In some embodiments, the component of the industrial automation system 10 may decrypt a digital certificate or a digital signature associated with the security update using a public or private key before implementing the security update. Accordingly, the edge device 13 may be used to facilitate adding or updating specific functions and/or capabilities of the component of the industrial automation system 10 without affecting other functions and/or capabilities of the component. Additionally, the component of the industrial automation system 10 may implement the security update with minimal or no loss of uptime. Further, the use of the edge device 13 to facilitate transmission of the software update to the component of the industrial automation system 10 instead of the controller 16 of the component helps reduce network traffic to and from the controller 16 such that network resource utilization may be optimized.

In certain embodiments, the component of the industrial automation system 10 may implement the security update while the component is running and without rebooting the component of the industrial automation system 10. For instance, in such embodiments, the security update may be urgent or critical to the functioning of the component, the component may run continuously for extended periods of time (e.g., days, weeks, or months), or the like. Under such circumstances, the component of the industrial automation system 10 may implement the security update after receiving the security update from the edge device 13.

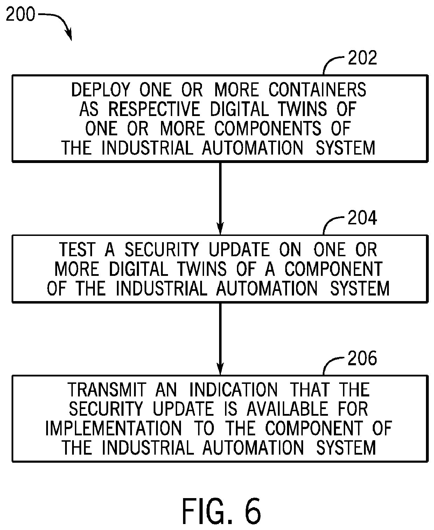

As mentioned above, one or more container nodes 30 of the container orchestration system 24 may deploy respective containers as digital twins of a component of the industrial automation system 10. For instance, a container node 30 of the container orchestration system 24 may generate and maintain a digital twin of the component of the industrial automation system 10. The digital twin may be used to test different types of security updates to the component of the industrial automation system 10 before implementing the different types of security updates in the component of the industrial automation system 10. With the foregoing in mind, FIG. 6 illustrates a method 200 in which the container node 30 may test one or more security updates against digital twins of one or more components of the industrial automation system 10 before transmitting the security updates to the components for implementation. Although the following description of the method 200 is described as being performed by the container node 30, it should be understood that any suitable container node that is configured to interface with the cluster of nodes of the container orchestration system 24 and the industrial control system 12 may perform the operations described herein. As mentioned above, in certain embodiments, the method 200 may be performed by the edge device 13 illustrated in FIG. 1 instead of the container node 30. Additionally, although the method 200 is described in a particular order, it should be understood that the method 200 may be performed in any suitable order.

At block 202, the container node 30 of the container orchestration system 24 may deploy one or more containers as respective digital twins of one or more components of the industrial automation system 10. For instance, the container node 30 may generate and maintain a state of the respective digital twins in the deployed containers over time. As mentioned above, each digital twin is a digital representation of the component of the industrial automation system 10. For example, the digital twin is a digital replica of the component of the industrial automation system 10 that includes each part, each feature, and/or each characteristic of the component in the real world. In certain embodiments, in order to deploy a container as a digital twin of a particular component, the container node 30 may receive an object model associated with the component, specification data associated with the component, software associated with the component, or the like, from a database. The container node 30 may then generate the digital twin based on the received the object model, the specification data, the software, or the like and deploy a container as the digital twin. In some embodiments, the digital twin may be a digital representation of a portion of the industrial automation system 10 or the entire industrial automation system 10.

After deploying one or more containers as respective digital twins of one or more components of the industrial automation system 10, at block 204, the container node 30 may test a security update associated with a particular component of the industrial automation system 10 on a corresponding digital twin of the component. In some embodiments, the container node 30 may test multiple types of security updates associated with a particular component of the industrial automation system 10 on multiple corresponding digital twins of the component. In other embodiments, the container node 30 may test security updates associated with multiple components of the industrial automation system 10 on multiple corresponding digital twins of the components. In this way, the container nodes 30 of the container orchestration system 24 may provide a flexible tool for analyzing different types of security updates of the digital twins of different types of components of the industrial automation system 10 to determine whether the security updates might cause unintended effects on the components of the industrial automation system 10 before implementing the security updates to the components of the industrial automation system 10.

The container node 30 may test the security update associated with a particular component of the industrial automation system 10 on a corresponding digital twin of the component by implementing the security update against the digital twin of the component. For instance, the security update may install a new security policy, update an existing security policy, install a new security setting, update an existing security setting, create a new security rule, update an existing security rule, install software (e.g., code), update at least a portion of existing software (e.g., code), add data utilized by the software, update existing data utilized by the software, install a new version of firmware, update an existing version of firmware, or the like, in the digital twin of the component. Accordingly, implementing the security update on the digital twin of the component of the industrial automation system 10 may replicate how the security update is implemented on the real-world component of the industrial automation system 10.

In certain embodiments, the container node 30 may then transmit a representation of the digital twin to a display 20 for an operator to review. For instance, the representation of the digital twin may include one or more indications of configurational parameters (e.g., data), operational parameters (e.g., data), security parameters (e.g., data), or the like, associated with the digital twin of the component before and/or after implementation of the security update. The operator may then determine whether the implementation of the security update to the real-world component of the industrial automation system 10 has the intended effect. For instance, the operator may determine whether one or more parameter values (e.g., configurational parameter values, operational parameter values, or the like) of the digital twin are within desirable threshold ranges. Additionally, the operator may determine whether the security update has caused any changes to the digital twin that would interfere with the operation of the corresponding component in the industrial automation system 10.

In certain embodiments, the container node 30 may automatically determine whether the implementation of the security update to the real-world component of the industrial automation system 10 may proceed. For instance, the container node 30 may receive one or more inputs indicative of desirable or permissible threshold ranges for parameter values (e.g., configurational parameter values, operational parameter values, or the like) of the corresponding component in the industrial automation system 10. After implementation of the security update to the digital twin of the corresponding component, the container node 30 may compare one or more parameter values associated with the digital twin to the desirable or permissible threshold ranges for the parameter values. If the container node 30 determines that the parameter values satisfy the threshold ranges for the parameter values, the container node 30 may transmit an indication to the display 20 that the implementation of the security update may proceed. In some embodiments, the container node 30 may automatically proceed with implementation of the security update after determining that the implementation of the security update may proceed. In other embodiments, the container node 30 may proceed with implementation of the security update after receiving confirmation from an operator to proceed with the implementation.

In certain embodiments, the representation of the digital twin may depict a simulated operation of the corresponding component in the industrial automation system 10 over time. For instance, the container node 30 may receive real-time sensor data from one or more sensors 18 associated with the component and/or the industrial automation system 10. Based on the real-time sensor data, the container node 30 may update the representation of the digital twin to display the simulated operation of the corresponding component based on real-time conditions of the industrial automation system 10. Additionally, or alternatively, the container node 30 may update the container deployed as the digital twin with the real-time sensor data such that the digital twin may replicate real-world conditions of the corresponding component of the industrial automation system 10 over time.

In any case, after the security update has been determined that it may be implemented on the component of the industrial automation system 10, at block 206, the container node 30 may transmit an indication that the security update is available for implementation to the component of the industrial automation system 10. Similar to block 104 of method 100, the component of the industrial automation system 10 may then transmit a request to pull the security update from the container node 30 for implementation.

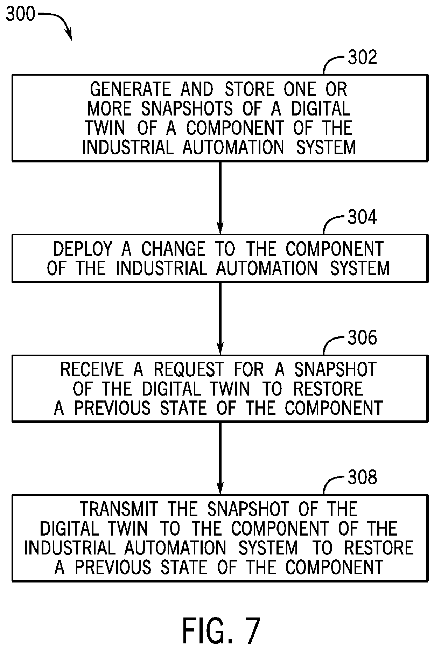

As mentioned above, the container node 30 may generate and store snapshots of the digital twin of the corresponding component at various moments in time (e.g., before a security update has been implemented on the corresponding component). The snapshots may then be used as respective backups for the component of the industrial automation system 10. For instance, if a security update that was implemented in the component of the industrial automation system 10 caused an unintended change, the container node 30 may push a snapshot of the digital twin representing the state of the component before the security update was implemented to the component of the industrial automation system 10. After receiving the snapshot of the digital twin, the state of the component of the industrial automation system 10 may revert to the state of the component before the security update was implemented based on the snapshot of the digital twin. With the foregoing in mind, FIG. 7 illustrates a method 300 in which the container node 30 may transmit a snapshot of a digital twin of a particular component of the industrial automation system 10 to revert or restore a state of the particular component of the industrial automation system 10 to the state of the particular component before a change has been implemented to the component. For instance, the change may be a security update as described herein. Although the following description of the method 300 is described as being performed by the container node 30, it should be understood that any suitable container node that is configured to interface with the cluster of nodes of the container orchestration system 24 and the industrial control system 12 may perform the operations described herein. As mentioned above, in certain embodiments, the method 300 may be performed by the edge device 13 illustrated in FIG. 1 instead of the container node 30. Additionally, although the method 300 is described in a particular order, it should be understood that the method 300 may be performed in any suitable order.

At block 302, the container node 30 may generate and store one or more snapshots of a digital twin of a component of the industrial automation system 10. As mentioned above, the snapshots may be used as respective backups for the component of the industrial automation system 10. For example, a snapshot of the digital twin may include a state or an image of the digital twin of the component at a particular point in time. The snapshot may include configuration data associated with the digital twin, operational data associated with the digital twin, security policy data associated with the digital twin, a software version associated with the digital twin, or the like. In certain embodiments, the container node 30 may generate one or more snapshots of the multiple digital twins of a particular component of the industrial automation system 10. For instance, the container node 30 may generate and store a first snapshot of a first digital twin of the component before a change has been implemented to the first digital twin, a second snapshot of the first digital twin of the component after the change has been implanted to the first digital twin, a third snapshot of a second digital twin of the component before a different change has been implemented to the second digital twin, a fourth snapshot of the second digital twin of the component after the change has been implement to the second digital twin, or the like. In some embodiments, the container node 30 may generate a table that associates each snapshot of a particular digital twin associated with a component of the industrial automation system 10 at a particular point in time with the component of the industrial automation system 10. For example, the table may index each snapshot in accordance with a time the snapshot was generated, an event that generation of the snapshot proceeded, an event that generation of the snapshot followed, or the like.

In any case, at block 304, the container node 30 may deploy a change to be implemented to the component of the industrial automation system 10. For instance, the container node 30 may transmit a security update to the component of the industrial automation system 10 as described herein. In certain situations, after the component of the industrial automation system 10 has implemented the change, the component of the industrial automation system 10 may manifest problems or interruptions in the operation of the component. For instance, the change to the component of the industrial automation system 10 may disrupt an operation of the component in the industrial automation system 10. If an operator determines that the operation of the component of the industrial automation system 10 has been disrupted after component implemented the change, the operator may determine to restore a previous state of the component.

At block 306, the container node 30 may receive a request for a snapshot of the digital twin of the component to restore a previous state of the component. In certain embodiments, the container node 30 may receive the request from the display 20 or the component of the industrial automation system 10. Additionally, or alternatively, the request may include an indication of a certain time period associated with the snapshot of the digital twin. For instance, the request may include an indication that the requested snapshot was generated before implementation of the change, an indication of a quantity of time (e.g., hours, days, weeks) that has passed since the requested snapshot has been generated, or the like. Based on the request, the container node 30 may identify a particular snapshot of the component of the industrial automation system 10 that has been stored in a memory accessible to the container node 30. At block 308, the container 30 may transmit the snapshot of the digital twin to the component of the industrial automation system 10. For instance, after receiving the snapshot of the digital twin, the component of the industrial automation system may restore a previous state of the component based on the snapshot of the digital twin. In this way, the container node 30 may facilitate seamless implementations of changes to components of the industrial automation system 10 and reversions of the changes to the components of the industrial automation system 10, thereby minimizing a quantity of downtime that may occur due to unintended consequences from implementing changes to the components of the industrial automation system 10.

Technical effects of the present disclosure include automatically deploying security updates to components of an industrial automation system by minimizing possible downtime of the components as a result of implanting the security updates. For instance, the security updates may be modular and/or targeted to specific issues or vulnerabilities associated with the components of the industrial automation system. In this way, specific functions and/or capabilities of the components may be added or updated without affecting other functions and/or capabilities of the components. Additionally, the security updates may be tested using digital twins of the components before implementing the security updates in the components. In this way, the digital twin may be used to mimic any real-world effects that may be caused by implementation of the security updates to the components of the industrial automation system. If such effects are as intended, the security updates may be pushed to the components for implementation. Further, snapshots of the digital twins may also be used as respective backups for the components of the industrial automation system. In particular, if a change (e.g., a security update) implemented in a component of the industrial automation system manifested an unintended effect (e.g., a disruption in the operation of the component), a snapshot of the digital twin of the component may be transmitted to the component to restore a previous state of the component before implementation of the change. In this way, unintended results from the implementation of changes or updates to components of the industrial automation system may be easily reversed or mitigated, thereby reducing the costs or time associated with performing maintenance on the components.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

While only certain features of the disclosure have been illustrated and described herein, many modifications and changes will occur to those skilled in the art. It is, therefore, to be understood that the appended claims are intended to cover all such modifications and changes as fall within the true spirit of the disclosure.
**The following is a list of further embodiments of the invention:**
Embodiment 1. An industrial control system, comprising:
   an edge device associated with a plurality of components of an industrial automation system, wherein the edge device comprises one or more processors and a memory comprising instructions, that when executed by the one or more processors, cause the one or more processors to perform operations comprising:
   receiving, from a network external to the industrial automation system, a security update for a component of the plurality of components of the industrial automation system;
   transmitting an indication that the security update is available for implementation to the component, wherein the component is configured to determine a time period for implementation of the security update after receiving the indication that the security update is available;
   receiving a request for the security update from the component; and
   transmitting the security update to the component for implementation, wherein the component is configured to install the security update during the time period for implementation after receiving the security update.
Embodiment 2. The industrial control system of embodiment 1, wherein the edge device comprises one or more computing nodes that are part of a container orchestration system.
Embodiment 3. The industrial control system of embodiment 1, wherein the security update targets a first subset of operating code associated with the component but not a second subset of operating code associated with the component.
Embodiment 4. The industrial control system of embodiment 1, wherein the component performs one or more background operations independent of a process provided by the industrial automation system during the time period for implementation and the component does not perform one or more primary operations associated with the process provided by the industrial automation system during the time period for implementation.
Embodiment 5. The industrial control system of embodiment 1, wherein the operations comprise cryptographically signing the security update before transmitting the indication that the security update is available for implementation to the component.
Embodiment 6. A system, comprising:
   a first computing node of a cluster of computing nodes that are part of a container orchestration system;
   a control system for controlling one or more operations of an operational technology (OT) component, wherein the control system is communicatively coupled to the first computing node, and the control system is communicatively coupled to the OT component;
   a second computing node of the cluster of computing nodes, wherein the second computing node is configured to transmit a pod to the first computing node, wherein the pod is configured to cause the first computing node to perform operations, comprising:
      deploying a container as a digital representation of the OT component;
      testing a security update on the digital representation of the OT component;
      determining that the security update is ready for implementation in the OT component in response to testing the security update on the digital representation of the OT component; and
      transmitting an indication that the security update is available for implementation to the OT component after determining that the security update is ready for implementation.
Embodiment 7. The system of embodiment 6, wherein testing the security update on the digital representation of the OT component comprises implementing the security update against the digital representation of the OT component.
Embodiment 8. The system of embodiment 7, wherein determining that the security update is ready for implementation in the OT component comprises determining that a set of data associated with the digital representation of the OT component after implementing the security update against the digital representation of the OT component satisfies one or more data threshold ranges for implementing the security update on the OT component.
Embodiment 9. The system of embodiment 6, wherein the operations comprise transmitting the digital representation of the OT asset to a display device for display.
Embodiment 10. The system of embodiment 6, wherein the operations comprise transmitting an indication that the security update is ready for implementation to a display device for display.
Embodiment 11. The system of embodiment 6, wherein the operations comprise:
   deploying a second container as a second digital representation of the OT component; and
   testing a second security update on the second digital representation of the OT component.
Embodiment 12. The system of embodiment 6, wherein the operations comprise:
   deploying a second container as a second digital representation of a second OT component; and
   testing a second security update on the second digital representation of the second OT component.
Embodiment 13. The system of embodiment 6, wherein the operations comprise:
   receiving sensor data from one or more sensors associated with the OT component; and
   updating the digital representation of the OT component based on the sensor data.
Embodiment 14. A method, comprising:
   receiving, via a first computing node of a cluster of computing nodes in a container orchestration system, a pod from a second computing node in the cluster of computing nodes;
   deploying, via the first computing node, a container as a digital representation of an operational technology (OT) component;
   generating, via the first computing node, one or more snapshots of the digital representation of the OT component;
   receiving, via the first computing node, a request for a particular snapshot of the one or more snapshots of the digital representation of the OT component, wherein the particular snapshot corresponds to a backup of the digital representation of the OT component before a change was implemented to the OT component; and
   transmitting, via the first computing node to the OT component, the particular snapshot of the digital representation, wherein the OT component is configured to restore a historical state of the OT component based on the particular snapshot of the digital representation.
Embodiment 15. The method of embodiment 14, wherein the change comprises a security update to the OT component.
Embodiment 16. The method of embodiment 14, wherein the one or more snapshots of the digital representation of the OT component comprises a plurality of snapshots of the digital representation of the OT component, and wherein each snapshot of the plurality of snapshots is associated with a respective time period in which the snapshot was generated by the first computing node.
Embodiment 17. The method of embodiment 16, comprising generating a table that associates the plurality of snapshots with the OT component based on the respective time periods associated with the plurality of snapshots.
Embodiment 18. The method of embodiment 17, comprising identifying the particular snapshot of the digital representation to transmit to the OT component based on the table.
Embodiment 19. The method of embodiment 14, comprising:
   receiving, via the first computing node, sensor data from one or more sensors associated with the OT component; and
   updating, via the first computing node, the digital representation of the OT component based on the sensor data.
Embodiment 20. The method of embodiment 14, wherein the one or more snapshots of the digital representation of the OT component comprise respective configuration data associated with the OT component, operational data associated with the OT component, security data associated with the OT component, or a combination thereof.

## Claims

1. A system, comprising:
a first computing node of a cluster of computing nodes that are part of a container orchestration system;
a control system for controlling one or more operations of an operational technology (OT) component, wherein the control system is communicatively coupled to the first computing node, and the control system is communicatively coupled to the OT component;
a second computing node of the cluster of computing nodes, wherein the second computing node is configured to transmit a pod to the first computing node, wherein the pod is configured to cause the first computing node to perform operations, comprising:
deploying a container as a digital representation of the OT component;
testing a security update on the digital representation of the OT component;
determining that the security update is ready for implementation in the OT component in response to testing the security update on the digital representation of the OT component; and
transmitting an indication that the security update is available for implementation to the OT component after determining that the security update is ready for implementation.

2. The system of claim 1, wherein testing the security update on the digital representation of the OT component comprises implementing the security update against the digital representation of the OT component.

3. The system of claim 2, wherein determining that the security update is ready for implementation in the OT component comprises determining that a set of data associated with the digital representation of the OT component after implementing the security update against the digital representation of the OT component satisfies one or more data threshold ranges for implementing the security update on the OT component.

4. The system of one of claims 1 to 3, wherein the operations comprise transmitting the digital representation of the OT asset to a display device for display.

5. The system of one of claims 1 to 4, wherein the operations comprise transmitting an indication that the security update is ready for implementation to a display device for display.

6. The system of one of claims 1 to 4, wherein the operations comprise:
deploying a second container as a second digital representation of the OT component; and
testing a second security update on the second digital representation of the OT component.

7. The system of one of claims 1 to 4, wherein the operations comprise:
deploying a second container as a second digital representation of a second OT component; and
testing a second security update on the second digital representation of the second OT component.

8. The system of one of claims 1 to 7, wherein the operations comprise:
receiving sensor data from one or more sensors associated with the OT component; and
updating the digital representation of the OT component based on the sensor data.

9. A method, comprising:
receiving, via a first computing node of a cluster of computing nodes in a container orchestration system, a pod from a second computing node in the cluster of computing nodes;
deploying, via the first computing node, a container as a digital representation of an operational technology, OT, component;
generating, via the first computing node, one or more snapshots of the digital representation of the OT component;
receiving, via the first computing node, a request for a particular snapshot of the one or more snapshots of the digital representation of the OT component, wherein the particular snapshot corresponds to a backup of the digital representation of the OT component before a change was implemented to the OT component; and
transmitting, via the first computing node to the OT component, the particular snapshot of the digital representation, wherein the OT component is configured to restore a historical state of the OT component based on the particular snapshot of the digital representation.

10. The method of claim 9, wherein the change comprises a security update to the OT component.

11. The method of claim 9, wherein the one or more snapshots of the digital representation of the OT component comprises a plurality of snapshots of the digital representation of the OT component, and wherein each snapshot of the plurality of snapshots is associated with a respective time period in which the snapshot was generated by the first computing node.

12. The method of claim 11, comprising generating a table that associates the plurality of snapshots with the OT component based on the respective time periods associated with the plurality of snapshots.

13. The method of claim 12, comprising identifying the particular snapshot of the digital representation to transmit to the OT component based on the table.

14. The method of claim 9, comprising:
receiving, via the first computing node, sensor data from one or more sensors associated with the OT component; and
updating, via the first computing node, the digital representation of the OT component based on the sensor data.

15. The method of claim 9, wherein the one or more snapshots of the digital representation of the OT component comprise respective configuration data associated with the OT component, operational data associated with the OT component, security data associated with the OT component, or a combination thereof.
